# FASCICULE DE BREVET EUROPEEN

(11) **EP 4 665 989 B1**
(45) Date de publication et mention de la délivrance du brevet: **18.11.2026**
(21) Numéro de dépôt: 24703600.7
(22) Date de dépôt: 12.01.2024
(51) Int. Cl.: F16H 59/14, B60K 31/00, F16H 61/02

(54) **CONTRÔLE DE LA CONSIGNE DE COUPLE D'UNE BOÎTE DE VITESSES AUTOMATISÉE D'UN VÉHICULE À GMP THERMIQUE**
VERFAHREN ZUR STEUERUNG DES DREHMOMENTSOLLWERTES EINES AUTOMATISIERTEN SCHALTGETRIEBES EINES FAHRZEUGS MIT VERBRENNUNGSANTRIEB
METHOD FOR CONTROLLING THE TORQUE SETPOINT OF AN AUTOMATED SHIFT TRANSMISSION OF A VEHICLE HAVING A COMBUSTION POWERTRAIN

(30) Priorité: 15.02.2023 FR 2301392
(43) Date de publication de la demande: 24.12.2025
(73) Titulaire: Stellantis Auto SAS, 78300 Poissy (FR)
(72) Inventeur: LEPAGE-CRUAU, Melanie, 78800 HOUILLES (FR); DUBOURG, Xavier, 95130 FRANCONVILLE (FR); MILHAU, Yohan, 78630 ORGEVAL (FR); SAULNIER, Julien, 90300 OFFEMONT (FR)
(74) Mandataire: PSIP
(86) Numéro de dépôt international: PCT/FR2024/050043
(87) Numéro de publication internationale: WO 2024/170834

(56) Documents cités:
- EP-B1- 2 103 475
- US-A1- 2003 158 645
- US-A1- 2018 134 293

## Description

### Domaine technique de l'invention

L'invention concerne les véhicules comprenant un groupe motopropulseur (ou GMP) purement thermique et à boîte de vitesses automatisée, et plus précisément le contrôle de la consigne de couple destinée à permettre le contrôle d'une telle boîte de vitesses.

### Etat de la technique

Certains véhicules, éventuellement de type automobile, comprennent un groupe motopropulseur (ou GMP) purement thermique, c'est-à-dire comportant au moins une machine motrice thermique, et une boîte de vitesses automatisée permettant de transmettre du couple issu de la machine motrice thermique, par exemple à des roues motrices.

Le document EP 2 103 475 B1 décrit un procédé de fonctionnement d'un système électronique de boîte de vitesses à étagement en présence du système de boîte de vitesses électronique et de régulateur de vitesse.

On entend ici par « boîte de vitesses automatisée » une boîte de vitesses ayant des rapports qui sont sélectionnables de façon automatisée en fonction d'une consigne de couple qui est fonction de la vitesse choisie par un usager du véhicule lors d'une phase de conduite assistée (régulation, limitation, ou bridage de vitesse).

Cette consigne de couple, destinée à la boîte de vitesses, est parfois dite « prédictive » ou « potentielle » car elle est destinée à aider le calculateur pilotant la boîte de vitesses à sélectionner le bon rapport de vitesse pour un prochain instant (ou instant d'après). Elle ne doit pas être confondue avec la consigne de couple, parfois dite « instantanée », qui est déterminée pour la machine motrice thermique du GMP. On notera que ces consigne de couple prédictive et consigne de couple instantanée sont généralement déterminées par le calculateur de supervision du GMP.

Ces consigne de couple prédictive et consigne de couple instantanée sont construites, entre autres, à partir de l'écart entre la vitesse en cours du véhicule et la vitesse choisie par l'usager (ou conducteur) du véhicule.

La consigne de couple instantanée est pondérée en fonction de l'écart de vitesse, et donc selon que la vitesse en cours du véhicule est plus ou moins proche de la vitesse choisie. L'objectif est en effet d'augmenter la demande de couple si l'écart de vitesse est important (état dit transitoire), et inversement de stabiliser la demande de couple si l'écart de vitesse est faible (état dit stable).

Actuellement, la consigne de couple prédictive n'est pas pondérée, et donc il n'est pas possible de différencier l'état stable de l'état transitoire. De ce fait, certains changements de rapport peuvent être inutiles lorsque l'écart de vitesse est faible, et donc la dynamique de la régulation, le confort acoustique/vibratoire et le rapport consommation de carburant / pollution ne sont pas optimaux.

L'invention a donc notamment pour but d'améliorer la situation.

### Présentation de l'invention

Elle propose notamment à cet effet un procédé de contrôle destiné à être mis en œuvre dans un véhicule comprenant un groupe motopropulseur comportant une machine motrice thermique propre à être couplée, par l'intermédiaire d'un dispositif de couplage (DC1), à une boîte de vitesses ayant des rapports sélectionnables de façon automatisée en fonction d'une consigne de couple fonction d'une vitesse choisie par un usager du véhicule lors d'une phase de conduite assistée de ce dernier (régulation, limitation, ou bridage de vitesse).

Ce procédé de contrôle se caractérise par le fait qu'il comprend une étape dans laquelle on détermine un coefficient de pondération de consigne en fonction d'un écart entre une vitesse en cours du véhicule et la vitesse choisie, et on pondère la consigne de couple par ce coefficient de pondération de consigne déterminé, lesdits rapports de la boîte de vitesses (BV) étant sélectionnés de façon automatisée en fonction de ladite consigne de couple pondérée.

Grâce à cette pondération de la première consigne de couple (prédictive ou potentielle) en fonction de l'écart de vitesse, la première consigne de couple pondérée est désormais en permanence adaptée à la situation en cours dans le véhicule, et donc aussi bien à un état stable qu'à un état transitoire, ce qui permet à chaque changement de rapport d'être adapté à la situation en cours.

Le procédé de contrôle selon l'invention peut comporter d'autres caractéristiques, et notamment :
- dans son étape, on peut déterminer le coefficient de pondération de consigne en fonction de l'écart de vitesse et de la vitesse choisie par l'usager ;
- dans son étape, on peut déterminer un premier coefficient de pondération de consigne lorsque l'écart de vitesse appartient à un premier intervalle qui est défini par des premières valeurs minimale et maximale choisies, et on peut déterminer un second coefficient de pondération de consigne lorsque l'écart de vitesse appartient à un deuxième intervalle qui est défini par des secondes valeurs minimale et maximale choisies, avec la seconde valeur minimale supérieure ou égale à la première valeur maximale ;
- selon un mode de réalisation non-revendiqué, en présence de la dernière option, dans son étape, on peut déterminer le premier coefficient de pondération de consigne dans un troisième intervalle, et le second coefficient de pondération de consigne dans un quatrième intervalle ;
- également en présence de la dernière option, dans son étape, on peut déterminer un premier coefficient de pondération de consigne ayant une première valeur constante choisie lorsque l'écart de vitesse appartient au premier intervalle, et un second coefficient de pondération de consigne ayant une seconde valeur constante choisie, différente de la première valeur constante, lorsque l'écart de vitesse appartient au deuxième intervalle ;
- également en présence de la dernière option, dans son étape, le premier coefficient de pondération de consigne peut être supérieur au second coefficient de pondération de consigne lorsque la consigne de couple est dans une phase de décroissance ou de croissance ;

L'invention propose également un produit programme d'ordinateur comprenant un jeu d'instructions qui, lorsqu'il est exécuté par des moyens de traitement, est propre à mettre en œuvre un procédé de contrôle du type de celui présenté ci-avant, dans un véhicule comprenant un groupe motopropulseur comportant une machine motrice thermique propre à être couplée, par l'intermédiaire d'un dispositif de couplage (DC1), à une boîte de vitesses ayant des rapports sélectionnables de façon automatisée en fonction d'une consigne de couple fonction d'une vitesse choisie par un usager du véhicule lors d'une phase de conduite assistée de ce dernier, pour contrôler cette consigne de couple.

L'invention propose également un dispositif de contrôle destiné à équiper un véhicule comprenant un groupe motopropulseur comportant une machine motrice thermique propre à être couplée, par l'intermédiaire d'un dispositif de couplage (DC1), à une boîte de vitesses ayant des rapports sélectionnables de façon automatisée en fonction d'une consigne de couple fonction d'une vitesse choisie par un usager du véhicule lors d'une phase de conduite assistée de ce dernier.

Ce dispositif de contrôle se caractérise par le fait qu'il comprend au moins un processeur et au moins une mémoire agencés pour effectuer les opérations consistant à déterminer un coefficient de pondération de consigne en fonction d'un écart entre une vitesse en cours du véhicule et la vitesse choisie, et à pondérer la consigne de couple par ce coefficient de pondération de consigne déterminé, et en ce qu'il est conçu pour transmettre ladite consigne de couple pondérée à un calculateur pilotant la boîte de vitesses (BV) afin que le calculateur sélectionne lesdits rapports de la boîte de vitesses (BV) de façon automatisée en fonction de ladite consigne de couple pondérée.

L'invention propose également un véhicule, éventuellement de type automobile, et comprenant, d'une part, un groupe motopropulseur comportant une machine motrice thermique propre à être couplée, par l'intermédiaire d'un dispositif de couplage (DC1), à une boîte de vitesses ayant des rapports sélectionnables par un calculateur pilotant ladite boîte de vitesses (BV) de façon automatisée en fonction d'une consigne de couple fonction d'une vitesse choisie par un usager du véhicule lors d'une phase de conduite assistée de ce dernier, et, d'autre part, un dispositif de contrôle du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule comprenant un dispositif de contrôle selon l'invention et une chaîne de transmission à GMP thermique et associé à un calculateur de supervision,
[Fig. 2] illustre schématiquement et fonctionnellement un exemple de réalisation d'un calculateur de supervision comprenant un exemple de réalisation d'un dispositif de contrôle selon l'invention, et
[Fig. 3] illustre schématiquement un exemple d'algorithme mettant en œuvre un procédé de contrôle selon l'invention.

### Description détaillée de l'invention

L'invention a notamment pour but de proposer un procédé de contrôle, et un dispositif de contrôle DC2 associé, destinés à permettre un contrôle d'une première consigne de couple ccb destinée à la boîte de vitesses BV automatisée d'un véhicule V comprenant un groupe motopropulseur (ou GMP) purement thermique, pendant une phase de conduite assistée (régulation, limitation, ou bridage de vitesse).

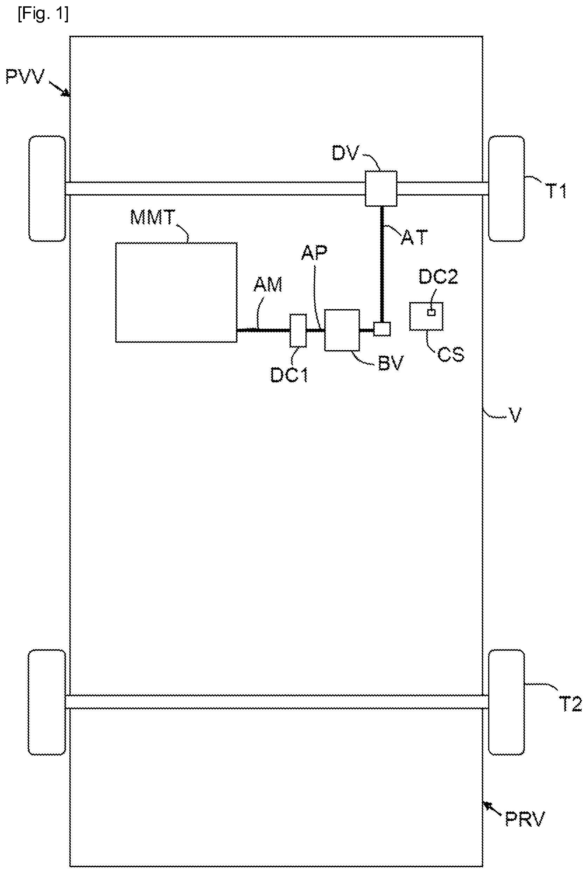

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule comprenant une chaîne de transmission à GMP purement thermique et boîte de vitesses automatisée. Ainsi, elle concerne les véhicules terrestres (véhicules utilitaires, camping-cars, minibus, cars, camions, motocyclettes, engins de voirie, engins de chantier, engins agricoles, engins de loisir (motoneige, kart), engins à chenille(s), les trains et les tramways, par exemple), les aéronefs et les bateaux.

On a schématiquement représenté sur la figure 1 un véhicule V comprenant une chaîne de transmission à GMP purement thermique (et donc exclusivement à machine(s) motrice(s) thermique(s) MMT) et boîte de vitesses BV automatisée, un calculateur de supervision CS, et un dispositif de contrôle DC2 selon l'invention.

Comme illustré, la chaîne de transmission comprend aussi, ici, un arbre moteur AM, un dispositif de couplage DC1, une boîte de vitesses BV automatisée, et un arbre de transmission AT.

Le fonctionnement de la chaîne de transmission (et donc du GMP) est supervisé par un calculateur de supervision CS.

La machine motrice thermique MMT comprend un vilebrequin (non représenté) qui est solidarisé fixement à l'arbre moteur AM afin d'entraîner ce dernier (AM) en rotation. Cette machine motrice thermique MMT est propre à fonctionner selon un premier régime pour fournir un premier couple, défini par une seconde consigne de couple ccm déterminée par le calculateur de supervision CS. De plus, elle (MMT) est propre à être couplée à la boîte de vitesses BV via le dispositif de couplage DC1.

Par exemple, ce dispositif de couplage DC1 peut être un embrayage à circuit hydraulique. Mais il pourrait être d'un autre type.

La boîte de vitesses BV est automatisée, et donc a des rapports sélectionnables de façon automatisée en fonction d'une première consigne de couple ccb qui est notamment fonction de la vitesse vc choisie par un usager du véhicule V. A titre d'exemple non limitatif, elle peut être de type dit « à double embrayage (ou DCT) ». Mais l'invention n'est pas limitée à ce type de boîte de vitesses automatisée.

Lorsque le dispositif de couplage DC1 la couple à la machine motrice thermique MMT, elle reçoit en entrée (sur son arbre primaire AP) un second régime et délivre en sortie, pour un arbre de transmission AT ici couplé à des roues motrices, un second couple qui est défini par une première consigne de couple (prédictive ou potentielle) ccb issue du calculateur de supervision CS et sur laquelle on reviendra plus loin.

Par exemple, les roues motrices peuvent faire partie d'un train T1 qui est situé dans la partie avant PVV du véhicule V et qui est, de préférence et comme illustré, couplé à l'arbre de transmission AT via un différentiel (ici avant) DV. Mais dans une variante ce train T1 pourrait être celui référencé T2 qui est situé dans la partie arrière PRV du véhicule V.

Comme évoqué plus haut, l'invention propose notamment un procédé de contrôle destiné à permettre le contrôle de la première consigne de couple ccb qui est destinée à la boîte de vitesses BV automatisée du véhicule V, au moins pendant une phase de conduite assistée.

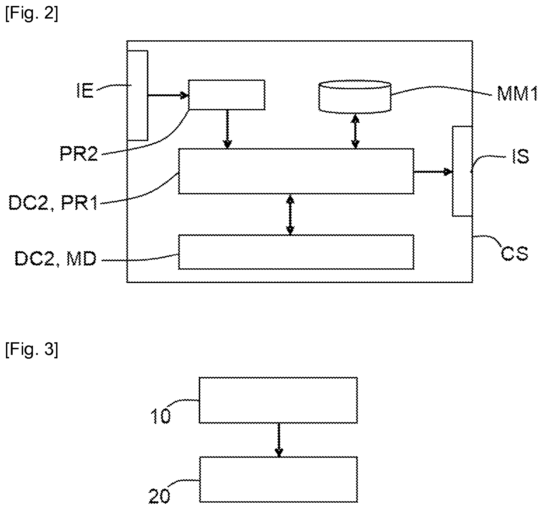

Ce procédé (de contrôle) peut être mis en œuvre au moins partiellement par le dispositif de contrôle DC2 (illustré au moins partiellement sur les figures 1 et 2) qui comprend à cet effet au moins un processeur PR1, par exemple de signal numérique (ou DSP (« Digital Signal Processor »)), et au moins une mémoire MD. Ce dispositif de contrôle DC2 peut donc être réalisé sous la forme d'une combinaison de circuits ou composants électriques ou électroniques (ou « hardware ») et de modules logiciels (ou « software »). A titre d'exemple, il peut s'agir d'un microcontrôleur.

La mémoire MD est vive afin de stocker des instructions pour la mise en œuvre par le processeur PR1 d'une partie au moins du procédé de contrôle. Le processeur PR1 peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique.

Dans l'exemple illustré non limitativement sur les figures 1 et 2, le dispositif de contrôle DC2 fait partie du calculateur de supervision CS. Mais cela n'est pas obligatoire. En effet, le dispositif de contrôle DC2 pourrait comprendre son propre calculateur dédié, lequel est alors couplé au calculateur de supervision CS, ou bien pourrait faire partie d'un autre calculateur embarqué dans le véhicule V et assurant au moins une autre fonction (éventuellement le calculateur pilotant la boîte de vitesses BV ou le calculateur pilotant la machine motrice thermique MMT), par exemple.

Comme illustré non limitativement sur la figure 3, le procédé (de contrôle), selon l'invention, comprend une étape 10-20 qui est mise en œuvre au moins chaque fois que le véhicule V est dans une phase de conduite assistée dans laquelle l'usager (ou conducteur) a choisi (ou sélectionné) une vitesse vc pour la circulation du véhicule V et que le calculateur de supervision CS a déterminé une première consigne de couple ccb pour la boîte de vitesses BV.

L'étape 10-20 du procédé comprend une sous-étape 10 dans laquelle on (le dispositif de contrôle DC2) commence par déterminer un coefficient de pondération de consigne cpcj en fonction de l'écart ev entre la vitesse en cours vv du véhicule V et la vitesse choisie vc (soit ev = vv - vc).

L'étape 10-20 du procédé comprend aussi une sous-étape 20 dans laquelle on (le dispositif de contrôle DC2) pondère la première consigne de couple ccb (déterminée par le calculateur de supervision CS) par le coefficient de pondération de consigne cpcj déterminé dans la sous-étape 10.

Plus le coefficient de pondération de consigne cpcj est grand, plus il induit une diminution de la première consigne de couple ccb.

On comprendra que le résultat de cette pondération constitue une première consigne de couple pondérée qui est ensuite transmise au calculateur pilotant la boîte de vitesses BV afin qu'il choisisse le rapport le mieux adapté à cette première consigne de couple pondérée.

La première consigne de couple (prédictive ou potentielle) ccb étant désormais pondérée en fonction de l'écart de vitesse ev, la première consigne de couple pondérée est désormais en permanence adaptée à la situation en cours dans le véhicule V, et donc aussi bien à un état stable (ev faible) qu'à un état transitoire (ev important). Cela permet à chaque changement de rapport d'être adapté à la situation en cours, et donc d'optimiser la dynamique de la régulation, le confort acoustique/vibratoire et le rapport consommation de carburant / pollution.

On notera que dans la sous-étape 20 de l'étape 10-20 on (le dispositif de contrôle DC2) peut déterminer le coefficient de pondération de consigne cpcj en fonction non seulement de l'écart de vitesse ev mais aussi de la vitesse choisie vc. On comprendra en effet qu'une même valeur de l'écart de vitesse ev peut être plus influente pour une faible vitesse choisie vc que pour une forte vitesse choisie vc. Mais une telle option n'est pas une obligation. En effet, le coefficient de pondération de consigne cpcj pourrait n'être que fonction de l'écart de vitesse ev, et donc indépendant de la vitesse choisie vc.

Par exemple, dans la sous-étape 20 de l'étape 10-20 on (le dispositif de contrôle DC2) peut déterminer soit un premier coefficient de pondération de consigne cpc1 (j = 1) lorsque l'écart de vitesse ev appartient à un premier intervalle i1 qui est défini par des premières valeurs minimale et maximale choisies, soit un second coefficient de pondération de consigne cpc2 (j = 2) lorsque l'écart de vitesse ev appartient à un deuxième intervalle i2 qui est défini par des secondes valeurs minimale et maximale choisies, avec la seconde valeur minimale supérieure ou égale à la première valeur maximale. En présence de cette option, on différencie volontairement l'état stable (ev faible appartenant au premier intervalle i1) et l'état transitoire (ev important appartenant au deuxième intervalle i2), afin d'accélérer la vitesse de convergence de la vitesse en cours vv vers la vitesse choisie vc, sans nuire à l'agrément de conduite.

Par exemple, les valeurs minimales et maximales des premier i1 et deuxième i2 intervalles peuvent être déterminées en usine ou centre d'essai avec un véhicule qui est similaire au véhicule V.

On notera que lorsque l'on différencie les état stable et état transitoire chaque coefficient de pondération de consigne cpcj peut être variable ou constant.

Dans la première alternative, on (le dispositif de contrôle DC2) peut déterminer soit un premier coefficient de pondération de consigne cpc1 dans un troisième intervalle i3 choisi (éventuellement en fonction de la vitesse choisie vc), soit le second coefficient de pondération de consigne cpc2 dans un quatrième intervalle i4 choisi (éventuellement en fonction de la vitesse choisie vc).

Par exemple, les valeurs minimales et maximales des troisième i3 et quatrième i4 intervalles peuvent être déterminées en usine ou centre d'essai avec un véhicule qui est similaire au véhicule V. Lorsque l'on détermine chaque coefficient de pondération de consigne cpcj (j = 1 ou 2) en fonction de l'écart de vitesse ev et de la vitesse choisie vc, on peut utiliser une table établissant une correspondance entre des premiers ou seconds coefficients de pondération de consigne et des paires d'écart de vitesse ev et de vitesse choisie. Cette table de correspondance peut être déterminée en usine ou centre d'essai avec un véhicule qui est similaire au véhicule V.

Dans la seconde alternative, on (le dispositif de contrôle DC2) peut déterminer soit un premier coefficient de pondération de consigne cpc1 qui a une première valeur constante v1 choisie (éventuellement en fonction de la vitesse choisie vc) lorsque l'écart ev appartient au premier intervalle i1 (état stable), soit le second coefficient de pondération de consigne cpc2 qui a une seconde valeur constante v2 choisie (éventuellement en fonction de la vitesse choisie vc), différente de la première valeur constante v1, lorsque l'écart ev appartient au deuxième intervalle i2 (état transitoire).

Par exemple, les première(s) v1 et seconde(s) v2 valeurs constantes peuvent être déterminées en usine ou centre d'essai avec un véhicule qui est similaire au véhicule V. Lorsque l'on détermine chaque coefficient de pondération de consigne cpcj (j = 1 ou 2) en fonction de l'écart de vitesse ev et de la vitesse choisie vc, on peut déterminer les première v1 et seconde v2 valeurs constantes au sein d'une table établissant une correspondance entre des premières ou secondes valeurs constantes et des paires d'écart de vitesse ev et de vitesse choisie. Cette table de correspondance peut être déterminées en usine ou centre d'essai avec un véhicule qui est similaire au véhicule V.

On notera également que lorsque l'on différencie les état stable et état transitoire les différences entre les premier cpc1 et second cpc2 coefficients de pondération de consigne peuvent varier en fonction de l'évolution en cours de la première consigne de couple ccb.

En présence de cette sous-option, lorsque la consigne de couple ccb est dans une phase de décroissance, on (le dispositif de contrôle DC2) peut déterminer un premier coefficient de pondération de consigne cpc1 (état stable) qui est supérieur au second coefficient de pondération de consigne cpc2 (état transitoire). Cela signifie que lorsque la consigne de couple ccb décroît et que l'on est dans l'état transitoire, on utilise un second coefficient de pondération de consigne cpc2. Puis, lorsque l'on entre dans l'état stable on utilise un premier coefficient de pondération de consigne cpc1 « plus important » (et donc supérieur au second coefficient de pondération de consigne cpc2) ce qui réduit la valeur de la première consigne de couple pondérée et donc la fait tendre plus rapidement vers le couple maximal que l'on peut obtenir avec un rapport (n+1) de la boîte de vitesse BV supérieur au rapport en cours (n). Ainsi, le rapport supérieur (n+1) sera engagé plus tôt, et donc le premier régime de la machine motrice thermique MMT est mieux maîtrisé et les confort acoustique/vibratoire et rapport consommation de carburant / pollution sont optimisés.

Lorsque la consigne de couple ccb est dans une phase de croissance, on (le dispositif de contrôle DC2) peut déterminer un premier coefficient de pondération de consigne cpc1 (état stable) qui est supérieur au second coefficient de pondération de consigne cpc2 (état transitoire). Cela signifie que lorsque la consigne de couple ccb croît et que l'on reste dans l'état stable, on utilise un premier coefficient de pondération de consigne cpc1 « relativement important » afin d'éviter de passer dans un rapport (n-1) de la boîte de vitesse BV inférieur au rapport en cours (n). Cela permet d'améliorer l'agrément de conduite et d'optimiser le confort acoustique/vibratoire et le rapport consommation de carburant / pollution.

Puis, lorsque l'on entre dans l'état transitoire on utilise un second coefficient de pondération de consigne cpc2 « moins important » (et donc inférieur au premier coefficient de pondération de consigne cpc1) ce qui augmente la valeur de la première consigne de couple pondérée et donc la fait dépasser plus rapidement le couple maximal que l'on peut obtenir avec le rapport en cours (n) de la boîte de vitesse BV et donc nécessite de passer dans le rapport (n-1) inférieur au rapport en cours (n) pour pouvoir réaliser le couple demandé. Ainsi, le rapport inférieur (n-1) sera engagé plus tôt, et donc on améliore la dynamique de la régulation.

On notera également, comme illustré non limitativement sur la figure 2, que le calculateur de supervision CS (ou le calculateur du dispositif de contrôle DC2) peut aussi comprendre une mémoire de masse MM1, notamment pour stocker la vitesse en cours vv, la vitesse choisie vc et la première consigne de couple ccb, ainsi que d'éventuelles données intermédiaires intervenant dans tous ses calculs et traitements. Par ailleurs, ce calculateur de supervision CS (ou le calculateur du dispositif de contrôle DC2) peut aussi comprendre une interface d'entrée IE pour la réception d'au moins la vitesse en cours vv, la vitesse choisie vc et la première consigne de couple ccb, pour les utiliser dans des calculs ou traitements, éventuellement après les avoir mises en forme et/ou démodulées et/ou amplifiées, de façon connue en soi, au moyen d'un processeur de signal numérique PR2. De plus, ce calculateur de supervision CS (ou le calculateur du dispositif de contrôle DC2) peut aussi comprendre une interface de sortie IS, notamment pour délivrer chaque message contenant la première consigne de couple pondérée.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR1, est propre à mettre en œuvre le procédé de contrôle décrit ci-avant pour contrôler la première consigne de couple ccb destinée à la boîte de vitesses BV du véhicule V.

## Revendications

1. Procédé de contrôle pour un véhicule (V) comprenant un groupe motopropulseur comportant une machine motrice thermique (MMT) propre à être couplée à une boîte de vitesses (BV) ayant des rapports sélectionnables de façon automatisée en fonction d'une consigne de couple fonction d'une vitesse choisie par un usager dudit véhicule (V) lors d'une phase de conduite assistée de ce dernier (V), **caractérisé en ce que** la machine motrice thermique (MMT) est propre à être couplée à la boîte de vitesses par l'intermédiaire d'un dispositif de couplage (DC1), et **en ce que**
le procédé de contrôle comprend une étape (10-20) dans laquelle on détermine un coefficient de pondération de consigne en fonction d'un écart entre une vitesse en cours dudit véhicule (V) et ladite vitesse choisie, et on pondère ladite consigne de couple par ledit coefficient de pondération de consigne déterminé, lesdits rapports de la boîte de vitesses (BV) étant sélectionnés de façon automatisée en fonction de ladite consigne de couple pondérée.

2. Procédé selon la revendication 1, **caractérisé en ce que** dans ladite étape (10-20) on détermine ledit coefficient de pondération de consigne en fonction dudit écart et de ladite vitesse choisie.

3. Procédé selon la revendication 1 ou 2, **caractérisé en ce que** dans ladite étape (10-20) on détermine un premier coefficient de pondération de consigne lorsque ledit écart appartient à un premier intervalle défini par des premières valeurs minimale et maximale choisies, et on détermine un second coefficient de pondération de consigne lorsque ledit écart appartient à un deuxième intervalle défini par des secondes valeurs minimale et maximale choisies, avec ladite seconde valeur minimale supérieure ou égale à ladite première valeur maximale.

4. Procédé selon la revendication 3, **caractérisé en ce que** dans ladite étape (10-20) on détermine un premier coefficient de pondération de consigne ayant une première valeur constante choisie lorsque ledit écart appartient audit premier intervalle, et un second coefficient de pondération de consigne ayant une seconde valeur constante choisie, différente de ladite première valeur constante, lorsque ledit écart appartient audit deuxième intervalle.

5. Procédé selon l'une des revendications 3 à 4, **caractérisé en ce que** dans ladite étape (10-20) ledit premier coefficient de pondération de consigne est supérieur audit second coefficient de pondération de consigne lorsque ladite consigne de couple est dans une phase de décroissance ou croissance.

6. Produit programme d'ordinateur comprenant un jeu d'instructions qui, lorsqu'il est exécuté par des moyens de traitement, est propre à mettre en œuvre le procédé de contrôle selon l'une des revendications 1 à 5, dans un véhicule (V) comprenant un groupe motopropulseur comportant une machine motrice thermique (MMT) propre à être couplée, par l'intermédiaire d'un dispositif de couplage (DC1), à une boîte de vitesses (BV) ayant des rapports sélectionnables de façon automatisée en fonction d'une consigne de couple fonction d'une vitesse choisie par un usager dudit véhicule (V) lors d'une phase de conduite assistée de ce dernier (V), pour contrôler ladite consigne de couple.

7. Dispositif de contrôle (DC2) pour un véhicule (V) comprenant un groupe motopropulseur comportant une machine motrice thermique (MMT) propre à être couplée à une boîte de vitesses (BV) ayant des rapports sélectionnables de façon automatisée en fonction d'une consigne de couple fonction d'une vitesse choisie par un usager dudit véhicule (V) lors d'une phase de conduite assistée de ce dernier (V), **caractérisé en ce que** la machine motrice thermique (MMT) est propre à être couplée à la boîte de vitesses par l'intermédiaire d'un dispositif de couplage (DC1), et **en ce que**
le dispositif de contrôle (DC2) comprend au moins un processeur (PR1) et au moins une mémoire (MD) agencés pour effectuer les opérations consistant à déterminer un coefficient de pondération de consigne en fonction d'un écart entre une vitesse en cours dudit véhicule (V) et ladite vitesse choisie, et à pondérer ladite consigne de couple par ledit coefficient de pondération de consigne déterminé, et **en ce qu'**il est conçu pour transmettre ladite consigne de couple pondérée à un calculateur pilotant la boîte de vitesses (BV) afin que le calculateur sélectionne lesdits rapports de la boîte de vitesses (BV) de façon automatisée en fonction de ladite consigne de couple pondérée.

8. Véhicule (V) comprenant un groupe motopropulseur comportant une machine motrice thermique (MMT) propre à être couplée, par l'intermédiaire d'un dispositif de couplage (DC1), à une boîte de vitesses (BV) ayant des rapports sélectionnables par un calculateur pilotant ladite boîte de vitesses (BV) de façon automatisée en fonction d'une consigne de couple fonction d'une vitesse choisie par un usager dudit véhicule (V) lors d'une phase de conduite assistée de ce dernier (V), **caractérisé en ce qu'**il comprend en outre un dispositif de contrôle (DC2) selon la revendication 7.

9. Véhicule selon la revendication 8, **caractérisé en ce qu'**il est de type automobile.

## Patentansprüche

1. Verfahren zur Steuerung eines Fahrzeugs (V), das eine Antriebseinheit umfasst, die eine thermische Antriebsmaschine (MMT) umfasst, die geeignet ist, mit einem Getriebe (BV) gekoppelt zu werden, das in Abhängigkeit von einem Drehmomentsollwert, der von einer von einem Benutzer des Fahrzeugs (V) während einer Phase des unterstützten Fahrens des Fahrzeugs (V) gewählten Geschwindigkeit abhängig ist, automatisch wählbare Gänge aufweist, **dadurch gekennzeichnet, dass** die thermische Antriebsmaschine (MMT) geeignet ist, über eine Kupplungsvorrichtung (DC1) mit dem Getriebe gekoppelt zu werden, und dass das Verfahren zur Steuerung einen Schritt umfasst (10-20), wobei ein Soll-Gewichtungskoeffizient in Abhängigkeit von einer Abweichung zwischen einer laufenden Geschwindigkeit des Fahrzeugs (V) und der ausgewählten Geschwindigkeit bestimmt wird und der Drehmomentsollwert mit dem bestimmten Soll-Gewichtungskoeffizienten gewichtet wird, wobei die Getriebeübersetzungen (BV) in Abhängigkeit von dem gewichteten Drehmomentsollwert automatisiert ausgewählt werden.

2. Verfahren nach Anspruch 1, **dadurch gekennzeichnet, dass** in dem Schritt (10-20) der Soll-Gewichtungskoeffizient in Abhängigkeit von der Abweichung und der gewählten Geschwindigkeit bestimmt wird.

3. Verfahren nach Anspruch 1 oder 2, **dadurch gekennzeichnet, dass** in dem Schritt (10-20) ein erster Soll-Gewichtungskoeffizient bestimmt wird, wenn die Abweichung zu einem ersten Intervall gehört, das durch erste ausgewählte minimale und maximale Werte definiert ist, und ein zweiter Soll-Gewichtungskoeffizient bestimmt wird, wenn die Abweichung zu einem zweiten Intervall gehört, das durch zweite ausgewählte minimale und maximale Werte definiert ist, wobei der zweite minimale Wert größer oder gleich dem ersten maximalen Wert ist.

4. Verfahren nach Anspruch 3, **dadurch gekennzeichnet, dass** in dem Schritt (10-20) ein erster Soll-Gewichtungskoeffizient mit einem ersten gewählten konstanten Wert, wenn die Abweichung zu dem ersten Intervall gehört, und ein zweiter Soll-Gewichtungskoeffizient mit einem zweiten gewählten konstanten Wert, der von dem ersten konstanten Wert verschieden ist, bestimmt wird, wenn die Abweichung zu dem zweiten Intervall gehört.

5. Verfahren nach einem der Ansprüche 3 bis 4, **dadurch gekennzeichnet, dass** in dem Schritt (10-20) der erste Soll-Gewichtungskoeffizient größer als der zweite Soll-Gewichtungskoeffizient ist, wenn der Drehmomentsollwert in einer Abnahme- oder Wachstumsphase ist.

6. Computerprogrammprodukt mit einem Satz von Befehlen, der, wenn er durch Verarbeitungsmittel ausgeführt wird, geeignet ist, das Steuerverfahren nach einem der Ansprüche 1 bis 5 in einem Fahrzeug (V) zu implementieren, das eine Antriebseinheit mit einer thermischen Antriebsmaschine (MMT) umfasst, die geeignet ist, über eine Kopplungsvorrichtung (DC1) mit einem Getriebe (BV) gekoppelt zu werden, das in Abhängigkeit von einer Drehmomentvorgabe, die von einem Benutzer des Fahrzeugs (V) während einer Phase des unterstützten Fahrens dieses Fahrzeugs gewählt wird, automatisch wählbare Verhältnisse aufweist letzteres (V), um den Drehmomentsollwert zu überprüfen.

7. Steuervorrichtung (DC2) für ein Fahrzeug (V) mit einem Antriebsstrang, der eine thermische Antriebsmaschine (MMT) aufweist, die geeignet ist, mit einem Getriebe (BV) gekoppelt zu werden, das in Abhängigkeit von einem Drehmomentsollwert, der von einer von einem Benutzer des Fahrzeugs (V) während einer Phase des unterstützten Fahrens des Fahrzeugs (V) gewählten Geschwindigkeit abhängig ist, automatisch wählbare Gänge aufweist, **dadurch gekennzeichnet, dass** die thermische Antriebsmaschine (MMT) geeignet ist, über eine Kupplungsvorrichtung (DC1) mit dem Getriebe gekoppelt zu werden, und dass die Steuervorrichtung (DC2) aufweist Mindestens ein Prozessor (PR1) und mindestens ein Speicher (MD), die so ausgebildet sind, dass sie die Operationen zum Bestimmen eines Soll-Gewichtungskoeffizienten in Abhängigkeit von einer Abweichung zwischen einer aktuellen Geschwindigkeit des Fahrzeugs (V) und der ausgewählten Geschwindigkeit und zum Gewichten des Soll-Drehmoments mit dem bestimmten Soll-Gewichtungskoeffizienten ausführen, und dass er so ausgebildet ist, dass er den gewichteten Drehmomentsollwert an einen das Getriebe (BV) steuernden Rechner überträgt, sodass der Rechner die Getriebeübersetzungen (BV) in Abhängigkeit von dem gewichteten Drehmomentsollwert automatisiert auswählt.

8. Fahrzeug (V) mit einem Antriebsstrang, der eine thermische Antriebsmaschine (MMT) aufweist, die über eine Kupplungsvorrichtung (DC1) mit einem Getriebe (BV) gekoppelt werden kann, das durch einen Rechner wählbare Gänge aufweist, der das Getriebe (BV) in automatischer Weise in Abhängigkeit von einem Drehmomentsollwert antreibt, der von einer Geschwindigkeit abhängt, die von einem Benutzer des Fahrzeugs (V) während einer Phase des unterstützten Fahrens des letzteren (V) gewählt wird, **dadurch gekennzeichnet, dass** es ferner eine Steuervorrichtung (DC2) nach Anspruch 7 aufweist.

9. Fahrzeug nach Anspruch 8, **dadurch gekennzeichnet, dass** es ein Kraftfahrzeug ist.

## Claims

1. Method for controlling a vehicle (V) comprising a drive unit comprising a thermal propulsion engine (MMT) capable of being coupled to a gearbox (BV) having automatically selectable gears in dependence on a torque setpoint value dependent on a speed selected by a user of the vehicle (V) during a phase of assisted driving of the vehicle (V), **characterized in that** the thermal propulsion engine (MMT) is capable of being coupled to the gearbox via a coupling device (DC1) and **in that** the method for controlling comprises a step (10-20) wherein a setpoint weighting coefficient is determined in dependence on a deviation between a running speed of the vehicle (V) and the selected speed and the torque setpoint value is weighted with the determined setpoint weighting coefficient, the transmission ratios (BV) be selected automatically depending on the weighted torque setpoint.

2. Method according to claim 1, **characterized in that** in step (10-20) the desired weighting coefficient is determined as a function of the deviation and the selected speed.

3. Method according to claim 1 or 2, **characterized in that** in said step (10-20) a first target weighting coefficient is determined if said deviation belongs to a first interval defined by first selected minimum and maximum values, and a second target weighting coefficient is determined if said deviation belongs to a second interval defined by second selected minimum and maximum values, said second minimum value being greater than or equal to said first maximum value.

4. Method according to claim 3, **characterized in that** in said step (10-20) a first target weighting coefficient having a first selected constant value when said deviation belongs to said first interval and a second target weighting coefficient having a second selected constant value different from said first constant value is determined when said deviation belongs to said second interval.

5. Method according to any one of claims 3 to 4, **characterized in that** in step (10-20) the first target weighting coefficient is greater than the second target weighting coefficient when the torque target value is in a decrease or growth phase.

6. Computer program product comprising a set of instructions which, when executed by processing means, is suitable for implementing the control method according to any one of Claims 1 to 5 in a vehicle (V) comprising a drive unit with a thermal propulsion engine (MMT) which is suitable for being coupled via a coupling device (DC1) to a transmission (BV) which, depending on a torque specification selected by a user of the vehicle (V) during a phase of assisted driving of this vehicle, has automatically selectable ratios (V), in order to check the torque setpoint value.

7. A control device (DC2) for a vehicle (V) comprising a drive train comprising a thermal propulsion engine (MMT) adapted to be coupled to a transmission (BV) having automatically selectable gears in dependence on a torque setpoint value dependent on a speed selected by a user of the vehicle (V) during a phase of assisted driving of the vehicle (V), **characterized in that** the thermal propulsion engine (MMT) is adapted to be coupled to the transmission via a coupling device (DC1), and **in that** the control device (DC2) comprises at least one processor (PR1) and at least one memory (MD) adapted to determine a setpoint weighting coefficient in dependence on a deviation between a current speed of the vehicle (V) and the selected speed and for weighting Execute desired torque with the specific desired weighting coefficient, and that it is designed in such a way that it transmits the weighted torque desired value to a computer controlling the transmission (BV), so that the computer automatically selects the transmission ratios (BV) as a function of the weighted torque desired value.

8. Vehicle (V) comprising a drive train comprising a thermal propulsion engine (MMT) which can be coupled via a coupling device (DC1) to a transmission (BV) comprising gears selectable by a computer which automatically drives the transmission (BV) in dependence on a torque setpoint dependent on a speed chosen by a user of the vehicle (V) during a phase of assisted driving of the latter (V), **characterized in that** it further comprises a control device (DC2) according to claim 7.

9. Vehicle according to Claim 8, **characterized in that** it is a motor vehicle.
